(19) Europäisches Patentamt
European Patent Office
Office européen des brevets

(11) EP 1 158 587 A2

(12) EUROPÄISCHE PATENTANMELDUNG

(43) Veröffentlichungstag:
**28.11.2001 Patentblatt 2001/48**

(51) Int Cl.⁷: **H01M 4/48**, H01M 4/24, H01M 4/62

(21) Anmeldenummer: **01109444.8**

(22) Anmeldetag: **24.04.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **25.05.2000 DE 10025761**

(71) Anmelder: **MERCK PATENT GmbH**
**64293 Darmstadt (DE)**

(72) Erfinder:
- **Heider, Lilia**
  **64560 Riedstadt (DE)**
- **Lotz, Natascha**
  **64390 Erzhausen (DE)**
- **Sandner, Tanja**
  **65428 Rüsselsheim (DE)**
- **Rothenburger, Mathias**
  **55128 Mainz (DE)**
- **Amann, Anja**
  **64395 Brensbach (DE)**

(54) **Dotiertes Anodenmaterial in elektrochemischen Zellen**

(57) Die Erfindung betrifft neuartige Materialien auf Basis von modifizierten oxidischen Materialien, wie z.B. Zinnoxiden, als aktives Anodenmaterial in elektrochemischen Zellen.

EP 1 158 587 A2

## Beschreibung

Die Erfindung betrifft neuartige Materialien auf Basis von modifizierten oxidischen Materialien, wie z.B. Zinnoxiden, als aktives Anodenmaterial in elektrochemischen Zellen.

Lithium-Ionen-Batterien gehören zu den aussichtsreichsten Systemen für mobile Anwendungen. Die Einsatzgebiete reichen dabei von hochwertigen Elektronikgeräten (z.B. Mobiltelefone, Camcorder) bis hin zu Batterien für Kraftfahrzeuge mit Elektroantrieb.

Diese Batterien bestehen aus Kathode, Anode, Separator und einem nichtwäßrigen Elektrolyt. Als Kathode werden typischerweise $Li(MnMe_z)_2O_4$, $Li(CoMe_z)O_2$, $Li(CoNi_xMe_z)O_2$ oder andere Lithium-Interkalations und Insertions-Verbindungen verwendet. Anoden können aus Lithium-Metall, weichen und harten Kohlenstoffen, Graphit, graphitischen Kohlenstoffen oder andere Lithium-Interkalations und Insertions-Verbindungen oder Legierungsverbindungen bestehen. Als Elektrolyt werden Lösungen mit Lithiumsalzen wie $LiPF_6$, $LiBF_4$, $LiC\text{-}IO_4$, $LiAsF_6$, $LiCF_3SO_3$, $LiN(CF_3SO_2)_2$ oder $LiC(CF_3SO_2)_3$ und deren Mischungen in aprotischen Lösungsmitteln verwendet.

In den aktuell kommerziell verfügbaren Lithium-Ionen-Batterien wird als Anode Kohlenstoff eingesetzt. Allerdings weist dieses Anodensystem einige Probleme auf. In diesem System tritt ein hoher Kapazitätsverlust beim 1. Zyklus auf, der durch einen irreversiblen Einbau von Lithium in die Kohlenstoffstruktur zustande kommt. Weiterhin ist die Zyklenstabilität der zur Verfügung stehenden Kohlenstoffe bzw. Graphite nicht zufriedenstellend. Ferner kommt der Sicherheitsaspekt hinzu, der durch kinetische Begrenzungen kritische Parameter hervorrufen kann.

Zur Verbesserung der Anodeneigenschaften werden neue Systeme gesucht, die z.B. die Kohlenstoffanode ersetzen. Hier werden vielfältige Anstrengungen unternommen. Die Kohlenstoffmaterialien werden z.B. durch oxidische Materialien oder Legierungen ersetzt. Wolfenstine untersucht in Journal of Power Sources 75 (1998) die Eignung von Zinnoxid-Zinn Mischungen als Anodenmaterial für Lithium-Ionen-Batterien. Der irreversible Li Verlust durch $Li_2O$-Bildung soll durch die bevorzugte Verwendung von SnO gegenüber $SnO_2$ minimiert werden. In EP 0823742 werden mit verschiedenen Metallen dotierte Zinn-Mischoxide beschrieben. Auch in US 5654114 wird die Verwendung von Zinnoxiden als Anodenmaterial für sekundäre Lithium-Ionen-Batterien beschrieben. Alle untersuchten Systeme weisen den Mangel auf, daß Li zu $Li_2O$ umgesetzt wird. Dadurch wird eine große Menge Li gebunden, was für die elektrochemischen Prozesse in der Batterie nicht mehr zur Verfügung steht.

Aufgabe der vorliegenden Erfindung ist es, Anodenmaterialien zur Verfügung zu stellen, die ein besseres Lade/Entladeverhalten im Vergleich zum Kohlenstoff bieten. Das bessere Verhalten soll durch höhere Kapazitäten und eine gute Zyklenstabilität charakterisiert sein.

Die erfindungsgemäße Aufgabe wird gelöst durch den Einsatz von modifizierten Zinnoxiden, die als Anodenmaterial in elektrochemischen Zellen verwendet werden.

Es wurde gefunden, daß eine Dotierung des Zinnoxides $SnO_2$ auf der Anionenseite zu einem verbesserten Anodensystem führt.

Überraschend wurde gefunden, daß die modifizierten Zinnoxid-Systeme hervorragende elektrochemische Eigenschaften aufweisen. Der irreversible Lithium-Verlust beim 1. Zyklus ist weiterhin zu beobachten. Dieser ist allerdings nicht so ausgeprägt wie vor der Behandlung des Zinnoxids $SnO_2$.

Die im Stand der Technik beschriebenen Verwendungen von Zinnoxiden für Anodenmaterialien weisen das Problem der Partikel-agglomeration auf. Überraschend wurde gefunden, daß mit dem erfindungsgemäßen Verfahren Partikel mit definiertem Durchmesser hergestellt werden können. Mit dem erfindungsgemäßen Verfahren können Primärpartikel im nm-Bereich und Sekundärpartikel mit einem Durchmesser unter 10 µm hergestellt werden. Diese kleinen Partikel führen zur Vergrößerung der aktiven Oberfläche.

Das Verfahren zur Herstellung des Anodenmaterials ist dadurch gekennzeichnet, daß

a) eine Zinnchlorid-Lösung mit Harnstoff versetzt wird,

b) die Lösung mit Urotropin und einer geeigneten Dotierverbindung versetzt wird,

c) das so erhaltene Sol in Petrolether emulgiert wird,

d) das erhaltene Gel gewaschen und das Lösungsmittel abgesaugt sowie

e) das Gel getrocknet und getempert wird.

Die erfindungsgemäßen Materialien sind für den Einsatz in elektrochemischen Zellen, bevorzugt in Batterien, besonders bevorzugt in sekundären Lithium-Ionen-Batterien, geeignet.

Das erfindungsgemäße Anodenmaterial kann in sekundären Lithium-Ionen-Batterien mit gängigen Elektrolyten eingesetzt werden. Geeignet sind z.B. Elektrolyte mit Leitsalzen ausgewählt aus der Gruppe $LiPF_6$, $LiBF_4$, $LiClO_4$,

$LiAsF_6$, $LiCF_3SO_3$, $LiN(CF_3SO_2)_2$ oder $LiC(CF_3SO_2)_3$ und deren Mischungen. Die Elektrolyte können auch organische Isocyanate (DE 199 44 603) zur Herabsetzung des Wassergehaltes enthalten.

Auch Verbindungen der allgemeinen Formel

$$[([R^1(CR^2R^3)_k]_lA_x)_yKt]^{+}\,{}^{-}N(CF_3)_2$$

wobei

Kt N,P,As,Sb,S,Se

A N, P, P(O), O, S, S(O), $SO_2$, As, As(O), Sb, Sb(O)

$R^1$, $R^2$ und $R^3$
gleich oder verschieden
H, Halogen, substituiertes und/oder unsubstituiertes Alkyl $C_nH_{2n+1}$, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,

A kann in verschiedenen Stellungen in $R^1$, $R^2$ und/oder $R^3$ eingeschlossen sein,
Kt kann in cyclischen oder heterocyclischen Ring eingeschlossen sein,
die an Kt gebundenen Gruppen können gleich oder verschieden sein

mit

n 1-18
m 3-7
k 0, 1-6
l 1 oder 2 im Fall von x=1 und 1 im Fall x=0
x 0,1
y 1-4

bedeuten, können enthalten sein (DE 9941566). Das Verfahren zur Herstellung der Verbindungen ist dadurch gekennzeichnet, daß ein Alkalisalz der allgemeinen Formel

$$D^{+}\,{}^{-}N(CF_3)_2$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^{+}\,{}^{-}E$$

wobei
Kt, A, $R^1$, $R^2$, $R^3$, k, l, x und y die oben angegebene Bedeutung haben und

${}^{-}E$ $F^-$, $Cl^-$, $Br^-$, $I^-$, $BF_4^-$, $ClO_4^-$, $AsF_6^-$, $SbF_6^-$ oder $PF_6^-$

bedeutet, umgesetzt wird.

Die Elektrolyte können auch enthalten, die Verbindungen der Formel

$$X\text{-}(CYZ)_m\text{-}SO_2N(CR^1R^2R^3)_2$$

mit

X H, F, Cl, $C_nF_{2n+1}$, $C_nF_{2n-1}$, $(SO_2)_kN(CR^1R^2R^3)_2$

Y H, F, Cl

Z H, F, Cl

$R^1$, $R^2$, $R^3$ H und/oder Alkyl, Fluoralkyl, Cycloalkyl

m 0-9 und falls X=H, m≠0

n 1-9

k 0, falls m=0 und k=1, falls m=1-9

enthalten, dagestellt dadurch, daß teil- oder perfluorierte Alkysulfonylfluoride mit Dimethylamin in organischen Lösungsmitteln umgesetzt werden (DE 199 466 73).

Auch Elektrolyte mit Komplexsalzen der allgemeinen Formel (DE 199 51 804)

$$M^{x+}[EZ]^{y-}_{x/y}$$

worin bedeuten:

x, y 1, 2, 3, 4, 5, 6

$M^{x+}$ ein Metallion

E eine Lewis-Säure, ausgewählt aus der Gruppe

$BR^1R^2R^3$, $AlR^1R^2R^3$, $PR^1R^2R^3R^4R^5$, $AsR^1R^2R^3R^4R^5$, $VR^1R^2R^3R^4R^5$,

$R^1$ bis $R^5$ gleich oder verschieden, gegebenenfalls durch eine Einfach- oder Doppelbildung direkt miteinander verbunden sind, jeweils einzeln oder gemeinsam die Bedeutung

eines Halogens (F, Cl, Br),

eines Alkyl- oder Alkoxyrestes ($C_1$ bis $C_8$) der teilweise oder vollständig durch F, Cl, Br substituiert sein kann,

eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann

eines, gegebenenfalls über Sauerstoff gebundenen aromatischen heterocyclischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und

Z $OR^6$, $NR^6R^7$, $CR^6R^7R^8$, $OSO_2R^6$, $N(SO_2R^6)(SO_2R^7)$, $C(SO_2R^6)(SO_2R^7)(SO_2R^8)$, $OCOR^6$, wobei

$R^6$ bis $R^8$ gleich oder verschieden sind, gegebenenfalls durch eine Einfach- oder Doppelbindung direkt miteinander verbunden sind, jeweils einzeln oder gemeinsam die Bedeutung

eines Wasserstoffs oder die Bedeutung wie $R^1$ bis $R^5$ haben, hergestellt durch Umsetzung von einem entsprechenden Bor- oder Phosphor-Lewis-Säure-Solvenz-Adukt mit einem Lithium- oder Tetraalkylammonium-Imid, -Methanid oder -Triflat, können verwendet werden.

Auch Boratsalze (DE 199 59 722) der allgemeinen Formel

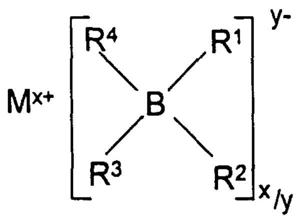

worin bedeuten:

M ein Metallion oder Tetraalkylammoniumion
x,y 1, 2, 3, 4, 5 oder 6
$R^1$ bis $R^4$ gleich oder verschieden, gegebenenfalls durch eine Einfach- oder Doppelbindung direkt miteinander verbundener Alkoxy- oder Carboxyreste ($C_1$-$C_8$) können enthalten sein. Hergestellt werden diese Boratsalze durch Umsetzung von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.

Auch Additive wie Silanverbindungen der allgemeinen Formel

$$SiR^1R^2R^3R^4$$

mit $R^1$ bis $R^4$ H

$$C_yF_{2y+1-z}H_z$$

$$OC_yF_{2y+1-z}H_z$$

$$OC(O)C_yF_{2y+1-z}H_z$$

$$OSO_2C_yF_{2y+1-z}H_z$$

und

$$1 \leq x < 6$$

$$1 \leq y \leq 8$$

und

$$0 \leq z \leq 2y+1$$

und
$R^1$-$R^4$ gleich oder verschieden
mit der Bedeutung eines aromatischen Rings aus der Gruppe Phenyl, Naphthyl der unsubstituiert oder ein- oder mehrfach durch F,
$C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein kann, oder mit der Bedeutung eines heterocyclischen aromatischen Rings aus der Gruppe Pyridyl, Pyrazyl oder Pyrimidyl, die jeweils ein- oder mehrfach mit F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, N

$(C_nF_{2n+1-z}H_z)_2$ substituiert sein können (DE 100 276 26), können enthalten sein.

Die erfindungsgemäßen Anodenmaterialien können auch in Elektrolytsysteme eingesetzt werden, die Lithiumfluoralkylphosphate der folgenden Formel enthalten,

$$Li^+[PF_x(C_yF_{2y+1-z}H_z)_{6-x}]^-$$

worin

$$1 \leq x \leq 5$$

$$3 \leq y \leq 8$$

$$0 \leq z \leq 2y + 1$$

bedeuten und die Liganden $(C_yF_{2y+1-z}H_z)$ gleich oder verschieden sein können, wobei die Verbindungen der allgemeinen Formel,

$$Li^+[PF_a(CH_bF_c(CF_3)_d)_e]^-$$

in der a eine ganze Zahl von 2 bis 5, b = 0 oder 1, c = 0 oder 1, d = 2 und
e eine ganze Zahl von 1 bis 4 bedeuten, mit den Bedingungen, daß b und c nicht gleichzeitig jeweils = 0 bedeuten und die Summe aus a + e gleich 6 ist und die Liganden $(CH_bF_c(CF_3)_d)$ gleich oder verschieden sein können, ausgenommen sind (DE 100 089 55). Das Verfahren zur Herstellung von Lithiumfluoralkylphosphaten ist dadurch gekennzeichnet, daß wenigstens eine Verbindung der allgemeinen Formel

$$H_mP(C_nH_{2n+1})_{3-m} \quad (III),$$

$$OP(C_nH_{2n+1})_3 \quad (IV),$$

$$Cl_mP(C_nH_{2n+1})_{3-m} \quad (V),$$

$$F_mP(C_nH_{2n+1})_{3-m} \quad (VI),$$

$$Cl_oP(C_nH_{2n+1})_{5-o} \quad (VII),$$

$$F_oP(C_nH_{2n+1})_{5-o} \quad (VIII),$$

in denen jeweils
$0 < m < 2$, $3 < n < 8$ und $0 < o < 4$ bedeutet
durch Elektrolyse in Fluorwasserstoff fluoriert wird, das so erhaltene Gemisch der Fluorierungsprodukte durch Extraktion, Phasentrennung und/oder Destillation aufgetrennt wird, und das so erhaltene fluorierte Alkylphosphoran in einem aprotischen Lösungsmittel oder Lösungsmittelgemisch unter Feuchtigkeitsausschluß mit Lithiumfluorid umgesetzt wird, und das so erhaltene Salz nach den üblichen Methoden gereinigt und isoliert wird.

Die erfindungsgemäßen Anodenmaterialien können auch in Elektrolytsysteme eingesetzt werden, die Salze der Formel

$$Li[P(OR^1)_a(OR^2)_b(OR^3)_c(OR^4)_dF_e]$$

worin $0 < a+b+c+d \leq 5$ und $a+b+c+d+e=6$ gilt, und $R^1$ bis $R^4$ unabhängig voneinander Alkyl-, Aryl- oder Heteroarylreste sind, wobei mindestens zwei von $R^1$ bis $R^4$ durch eine Einfach- oder Doppelbindung direkt miteinander verbunden sein können, enthalten (DE 100 16 801). Dargestellt werden die Verbindungen durch Umsetzung von Phosphor (V)-Verbindungen der allgemeinen Formel

$$P(OR^1)_a(OR^2)_b(OR^3)_c(OR^4)_dF_e$$

worin $0 < a+b+c+d \leq 5$ und $a+b+c+d+e=5$ gilt, und $R^1$ bis $R^4$ die oben angegebenen Bedeutungen haben mit Lithiumfluorid in Gegenwart eines organischen Lösungsmittels.

Auch Ionische Flüssigkeiten der allgemeinen Formel

$$K^+A^-$$

worin bedeuten:

$K^+$ ein Kation ausgewählt aus der Gruppe

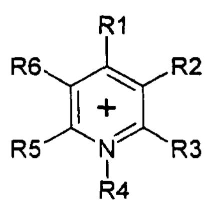
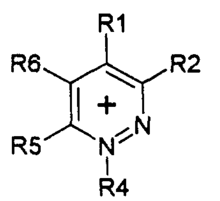

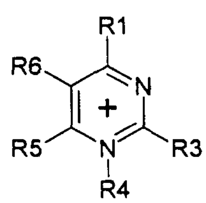
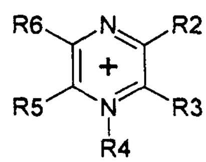

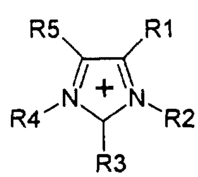
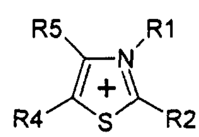

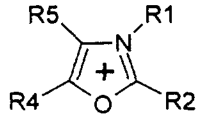
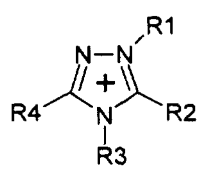

wobei $R^1$ bis $R^5$ gleich oder verschieden, gegebenenfalls durch eine Einfach- oder Doppelbindung direkt miteinander verbunden sind und jeweils einzeln oder gemeinsam folgende Bedeutung haben:

- H,

- Halogen,
- Alkylrest ($C_1$ bis $C_8$) der teilweise oder vollständig durch weitere Gruppen, vorzugsweise F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann

und
$A^-$ ein Anion ausgewählt aus der Gruppe

$$[B(OR^1)_n(OR^2)_m(OR^3)_o(OR^4)_p]^-$$

mit 0≤n, m, o, p≤4 und

$$m+n+o+p=4$$

wobei $R^1$ bis $R^4$ verschieden oder paarweise gleich sind, gegebenenfalls durch eine Einfach- oder Doppelbildung direkt miteinander verbunden sind, jeweils einzeln oder gemeinsam

die Bedeutung eines aromatischen Rings aus der Gruppe Phenyl, Naphthyl, Anthracenyl oder Phenanthrenyl, der unsubstituiert oder ein- oder mehrfach durch $C_nF_{(2n+1-x)}H_x$ mit 1<n<6 und 0<x≤13 oder Halogen (F, Cl, Br) substituiert sein kann, besitzen,

die Bedeutung eines aromatischen heterocyclischen Rings aus der Gruppe Pyridyl, Pyrazyl oder Pyrimidyl, der unsubstituiert oder ein- oder mehrfach durch $C_nF_{(2n+1-x)}H_x$ mit 1<n<6 und 0<x≤13 oder Halogen oder Halogen (F, Cl, Br) substituiert sein kann, besitzen,

die Bedeutung eines Alkylrests ($C_1$ bis $C_8$) der teilweise oder vollständig durch weitere Gruppen, vorzugsweise F, Cl, , $N(C_nF_{(2n+1-x)}H_x)_2$, $O(C_nF_{(2n+1-x)}H_x)$. $SO_2(C_nF_{(2n+1-x)}H_x)$, $C_nF_{(2n+1-x)}H_x$ mit 1<n<6 und 0<x≤13 substituiert sein kann, besitzen,

beziehungsweise $OR^1$ bis $OR^4$

einzeln oder gemeinsam die Bedeutung eines aromatischen oder aliphatischen Carboxyl-, Dicarboxyl-, Oxysulfonyl- oder Oxycarboxylrests, der teilweise oder vollständig durch weitere Gruppen, vorzugsweise F, Cl $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann, besitzen (DE 100 265 65), können im Elektrolyten enthalten sein. Auch Ionische Flüssigkeiten $K^+A^-$ mit $K^+$ definiert wie oben und

$A^-$ ein Anion ausgewählt aus der Gruppe

$$\left[ PF_x(C_yF_{2y+1-z}H_z)_{6-x} \right]^-$$

und

$$1 \leq x < 6$$

$$1 \leq y \leq 8$$

und

$$0 \leq z \leq 2y+1$$

können enthalten sein (DE 100 279 95).

Die erfindungsgemäßen Anodenmaterialien können auch in Elektrolytsystemen enthalten sein mit Verbindungen folgender Formel:

$$NR^1R^2R^3$$

worin

$R^1$ und $R^2$ H, $C_yF_{2y+1-z}H_z$ oder $(C_nF_{2n-m}H_m)X$, wobei X ein aromatischer oder heterozyklischer Rest ist, bedeuten und

$R^3$ $(C_nF_{2n-m}H_m)Y$, wobei Y ein heterozyklischer Rest ist, oder

$(C_oF_{2o-p}H_p)Z$, wobei Z ein aromatischer Rest ist, bedeutet,

und wobei n, m, o, p, y und z die folgenden Bedingungen erfüllen:

$$0 \leq n \leq 6,$$

$$0 \leq m \leq 2n,$$

$$2 \leq o \leq 6,$$

$$0 \leq p \leq 2o,$$

$$1 \leq y \leq 8 \text{ und}$$

$$0 \leq z \leq 2y+1,$$

zur Verringerung des Säuregehalts in aprotischen Elektrolytsystemen in elektrochemischen Zellen.

Auch Fluoralkylphosphate der allgemeinen Formel

$$M^{n+}[PF_x(C_yF_{2y+1-z}H_z)_{6-x}]_n^-$$

worin

$$1 \leq x \leq 6$$

$$1 \leq y \leq 8$$

$$0 \leq z \leq 2y + 1$$

$$1 \leq n \leq 3 \text{ und}$$

$M^{n+}$ die Bedeutung eines ein- bis dreiwertigen Kations besitzt, insbesondere:

$$NR^1R^2R^3R^4,$$

$$PR^1R^2R^3R^4,$$

$$P(NR^1R^2)_kR^3{}_mR^4{}_{4-k-m} \text{ (mit k=1-4, m=0-3 und k+m≤4)},$$

$$C(NR^1R^2)(NR^3R^4)(NR^5R^6),$$

$C(Aryl)_3$, Rb oder Tropylium

mit $R^1$ bis $R^8$ H, Alkyl und Aryl ($C_1$-$C_8$) die teilweise durch F, Cl oder Br substituiert sein können,

wobei $M^{n+}$ = $Li^+$, $Na^+$, $Cs^+$, $K^+$ und $Ag^+$ ausgenommen sind, können enthalten sein. Diese Fluoralkylphosphate sind erhältlich indem Phosphorane mit einem Fluorid oder Metallfluoralkylphosphate mit einem Fluorid oder Chlorid in organischen aprotischen Lösungsmitteln umgesetzt werden (DE 100 388 58).

Der Elektrolyt kann auch ein Gemisch enthalten, daß

a) wenigstens ein Lithiumfluoroalkylphosphat-Salz der allgemeinen Formel

$$Li^+ [PF_x(C_yF_{2y+1-z}H_z)_{6-x}]^-$$

worin

$$1 \le x \le 5$$

$$1 \le y \le 8 \text{ und}$$

$$0 \le z \le 2y + 1$$

bedeuten und die Liganden ($C_yF_{2y+1-z}H_z$) jeweils gleich oder verschieden sind und
b) wenigstens ein Polymeres (DE 100 58 264) enthält.

Im Elektrolyten können auch Tetrakisfluoroalkylborat-Salze der allgemeinen Formel

$$M^{n+} ([BR_4]^-)_n$$

worin

$M^{n+}$ ein einwertiges, zweiwertiges oder dreiwertiges Kation ist,

die Liganden R jeweils gleich sind und für ($C_xF_{2x+1}$) mit $1 \le x \le 8$ stehen

und n = 1, 2 oder 3 ist (DE 100 558 11) enthalten sein. Das Verfahren zur Herstellung von Tetrakisfluoroalkylborat-Salzen ist dadurch gekennzeichnet, daß wenigstens eine Verbindung der allgemeinen Formel $M^{n+}$ ($[B(CN)_4]^-)_n$ worin $M^{n+}$ und n die oben angegebene Bedeutung haben, durch Umsetzung mit wenigstens einem Fluorierungsmittel in wenigstens einem Lösungsmittel fluoriert und die so erhaltene fluorierte Verbindung nach den üblichen Methoden gereinigt und isoliert wird.

Der Elektrolyt kann auch Boratsalze der allgemeinen Formel

$$M^{n+}\ [BF_x(C_yF_{2y+1-z}H_z)_{4-x}]_n^-$$

enthalten, worin bedeuten:

$$1<x<3,$$

$$1\leq y\leq 8$$

und

$$0\leq z\leq 2y+1$$

und

M ein- bis dreiwertiges Kation ($1\leq n\leq 3$), außer Kalium und Barium,

insbesondere:
Li,

$$NR^1R^2R^3R^4,\ PR^5R^6R^7R^8,\ P(NR^5R^6)_kR^7{}_mR^8{}_{4-k-m}\ \text{(mit k=1-4, m=0-3 und k+m}\leq 4)$$

oder

$$C(NR^5R^6)(NR^7R^8)(NR^9R^{10}),$$

wobei

$R^1$ bis $R^4$ $C_yF_{2y+1-z}H_z$ und

$R^5$ bis $R^{10}$ H oder $C_yF_{2y+1-z}H_z$ oder

ein aromatisches heterozyklisches Kation, insbesondere Stickstoff-und/oder Sauerstoff- und/oder Schwefelhaltige aromatische heterozyklische Kationen (DE 101 031 89). Das Verfahren zur Herstellung dieser Verbindungen ist dadurch gekennzeichnet, daß

a) $BF_3$-Lösungsmittel-Komplexe 1:1 mit Alkyllithium unter Kühlung umgesetzt werden, nach langsamer Erwärmung das Lösungsmittel zu einem Großteil entfernt und anschließend der Feststoff abfiltriert und mit einem geeigneten Lösungsmittel gewaschen wird, oder

b) Lithiumsalze in einem geeigneten Lösungsmittel 1:1 mit $B(CF_3)F_3$-salzen umgesetzt werden, bei erhöhter Temperatur gerührt und nach Entfernen des Lösungsmittels das Reaktionsgemisch mit aprotischen nichtwäßrigen Lösungsmitteln, vorzugsweise mit Lösungsmitteln die in elektrochemischen Zellen verwendet werden, versetzt und getrocknet wird, oder

c) $B(CF_3)F_3$-salze 1:1 bis 1:1,5 mit Lithiumsalzen in Wasser bei erhöhter Temperatur umgesetzt und 0,5 bis 2 Stunden am Siedepunkt erhitzt werden, das Wasser entfernt und das Reaktionsgemisch mit aprotischen nichtwäßrigen Lösungsmitteln, vorzugsweise mit Lösungsmitteln die in elektrochemischen Zellen verwendet werden,

versetzt getrocknet wird.

Im Elektrolyten können auch Fluoroalkylphosphat-Salze der allgemeinen Formel

$$M^{n+}\ ([PF_x(C_yF_{2y+1-z}H_z)_{6-x}]^-)_n$$

enthalten sein, worin
$M^{n+}$ ein einwertiges, zweiwertiges oder dreiwertiges Kation ist,

$$1 \leq x \leq 5,$$

$$1 \leq y \leq 8$$

und
$0 \leq z < 2y + 1$ sind, n = 1, 2 oder 3 bedeuten und die Liganden ($C_yF_{2y+1-z}H_z$) jeweils gleich oder verschieden sind, wobei die Fluoroalkylphosphat-Salze, in denen $M^{n+}$ ein Lithium-Kation ist, sowie die Salze

$$M^+([PF_4(CF_3)_2]^-) \text{ mit } M^+ = Cs^+, Ag^+ \text{ oder } K^+,$$

$$M^+([PF_4(C_2F_5)_2]^-) \text{ mit } M^+ = Cs^+,$$

$$M^+([PF_3(C_2F_5)_3]^-) \text{ mit } M^+ = Cs^+, K^+, Na^+ \text{ oder para-}Cl(C_6H_4)N_2^+,$$

$$M^+([PF_3(C_3F_7)_3]^-) \text{ mit } M^+ = Cs^+, K^+, Na^+, \text{ para-}Cl(C_6H_4)N_2^+$$

oder para-$O_2N(C_6H_4)N_2^+$, ausgenommen sind (DE 100 558 12). Das Verfahren zur Herstellung dieser Fluoroalkylphosphat-Salze ist dadurch gekennzeichnet, daß wenigstens eine Verbindung der allgemeinen Formel

$$H_rP(C_sH_{2s+1})_{3-r},$$

$$OP(C_sH_{2s+1})_3,$$

$$Cl_rP(C_sH_{2s+1})_{3-r},$$

$$F_rP(C_sH_{2s+1})_{3-r},$$

$$Cl_tP(C_sH_{2s+1})_{5-t}$$

und/oder

$$F_tP(C_sH_{2s+1})_{5-t},$$

in denen jeweils

$$0 \leq r \leq 2$$

$$3 \leq s \leq 8$$

und

$$0 \leq t \leq 4$$

bedeuten, durch Elektrolyse in Fluorwasserstoff fluoriert wird, das so erhaltene Gemisch der Fluorierungsprodukte aufgetrennt wird und das so erhaltene fluorierte Alkylphosphoran in einem aprotischen Lösungsmittel oder Lösungsmittelgemisch unter Feuchtigkeitsausschluß mit einer Verbindung der allgemeinen Formel $M^{n+}(F^{-})_n$ worin $M^{n+}$ und n die oben angegebene Bedeutung haben, umgesetzt wird, und das so erhaltene Fluoroalkylphosphat-Salz nach den üblichen Methoden gereinigt und isoliert wird.

Die erfindungsgemäßen Anodenmaterialien können in Systemen eingesetzt werden mit Anodenmaterial, bestehend aus beschichteten Metallkernen, ausgewählt aus der Gruppe Sb, Bi, Cd, In, Pb, Ga und Zinn oder deren Legierungen (DE 100 16 024). Das Verfahren zur Herstellung dieses Anodenmaterials ist dadurch gekennzeichnet, daß

a) eine Suspension oder ein Sol des Metall- oder Legierungskerns in Urotropin hergestellt wird,

b) die Suspension mit Kohlenwasserstoffen mit $C_5$-$C_{12}$ emulgiert werden,

c) die Emulsion auf die Metall- oder Legierungskerne aufgefällt werden und

d) durch Temperung des Systems die Metallhydroxide bzw. -oxihydroxide in das entsprechende Oxid übergeführt werden.

Ebenso können die erfindungsgemäßen Anodenmaterialien in Systemen mit polymerbeschichteten Lithium-Mischoxid-Partikeln für Kathodenmaterialien (DE 19946066) eingesetzt werden. Das Verfahren zur Herstellung von mit einem oder mehreren Polymeren beschichteten Lithium-Mischoxid-Partikeln ist dadurch gekennzeichnet, daß die Partikel in einem Lösungsmittel suspendiert werden und danach die beschichteten Partikel abfiltriert, getrocknet und gegebenenfalls calciniert werden. Auch können die erfindungsgemäßen Anodenmaterialien in Systemen mit Kathoden eingesetzt werden, die aus Lithium-Mischoxid-Partikeln bestehen, die mit einem oder mehreren Metalloxiden beschichtet sind (DE 19922522). Das Verfahren zur Herstellung von mit einem oder mehreren Metalloxiden beschichteten Lithium-Mischoxid-Partikeln ist dadurch gekennzeichnet, daß die Partikel in einem organischen Lösungsmittel suspendiert werden, die Suspension mit einer Lösung einer hydrolysierbaren Metallverbindung und einer Hydrolyselösung versetzt und danach die beschichteten Partikel abfiltriert, getrocknet und gegebenenfalls calciniert werden.

Ebenso können die erfindungsgemäßen Anodenmaterialien in Systemen mit Kathoden eingesetzt werden, die aus Lithium-Mischoxid-Partikeln bestehen, die mit Alkalimetallverbindungen und Metalloxiden ein- oder mehrfach beschichtet sind (DE 100 14 884). Das Verfahren zur Herstellung dieser Materialien ist dadurch gekennzeichnet, daß die Partikel in einem organischen Lösungsmittel suspendiert werden, eine Alkalimetallsalzverbindung suspendiert in einem organischen Lösungsmittel zugegeben wird, Metalloxide gelöst in einem organischen Lösungsmittel zugegeben werden, die Suspension mit einer Hydrolyselösung versetzt wird und anschließend die beschichteten Partikel abfiltriert, getrocknet und calciniert werden.

Ebenso können die erfindungsgemäßen Anodenmaterialien in Systemen eingesetzt werden, die Anodenmaterialien mit reduziertem Zinnoxid enthalten (DE 100 257 62). Dieses Anodenmaterial wird hergestellt indem

a) eine Zinnchlorid-Lösung mit Harnstoff versetzt wird,

b) die Lösung mit Urotropin versetzt wird,

c) das so erhaltene Sol in Petrolether emulgiert wird,

d) das erhaltene Gel gewaschen und das Lösungsmittel abgesaugt wird,

e) das Gel getrocknet und getempert wird und

f) das erhaltene $SnO_2$ in einem begasbaren Ofen einem reduzierendem Gasstrom ausgesetzt wird.

Nachfolgend wird ein allgemeines Beispiel der Erfindung näher erläutert.

Als Ausgangsverbindungen werden 1 - 2 Molare, bevorzugt 2 Molare, Zinntetrachlorid-Lösungen eingesetzt. Die Lösung wird unter Kühlung und intensivem Rühren in Wasser gegeben. Der entstehende weiße Niederschlag im Falle des Sn-Systems wird durch Erwärmung aufgelöst. Nach dem Abkühlen auf Raumtemperatur wird die dem System entsprechende Harnstoffmenge zugegeben und vollständig gelöst. Die Zugabe des Harnstoffs bzw. das Lösungsverhalten ist Systemabhängig.
Die Dotierung erfolgt auf der Anionenseite, d.h. $SnO_{2-x}Y_x$, wobei Y ausgewählt aus der Gruppe F, Cl, Br, I, S, Se, Te, B, N und P ist. Das Anion wird durch die Zugabe der entsprechenden Menge der Dotiersubstanz in fester oder flüssiger Form zu dieser Lösung realisiert. Es werden organische oder anorganische Salze verwendet. In diesem Fall wurde $NH_4F$ zugegeben. Es können aber auch LiF, NaF oder andere anorganische, wie organische Fluoride zugegeben werden. Die Konzentration der Dotiersubstanz liegt im Bereich von 1 - 20 Gew%, bevorzugt im Bereich 5- 15%.

Durch Zugabe von Wasser wird die gewünschte Konzentration der Lösung eingestellt (siehe Angabe oben). Die Lösung wird auf Temperaturen zwischen 0 und 10°C, bevorzugt auf 5-7°C, gekühlt. Im bevorzugten Verhältnis 1: 1 wird eine 3,5 Molare Hexamethylentetramin-Lösung zugegeben. Das Verhältnis gilt wiederum für das Zinnsystem. Es kann auch mit 10% Unter- oder Überschuß an Hexamethylentetramin gearbeitet werden. Das Gemisch wird solange gerührt, bis das Sol klar ist.

Benzin (Petrolether) wird mit 0,5 bis 1,5%, bevorzugt 0,7%, handelsüblichen Emulgatoren, bevorzugt mit Span 80, versetzt. Die Lösung wird auf Temperaturen zwischen 30°C und 70°C, bevorzugt auf 50°C, erwärmt. Die oben beschriebene Lösung wird unter ständigem Rühren zugegeben. Das sich bildende Gel wird nach 3 bis 20 min, bevorzugt nach 10 min, mit einer Ammoniak-Lösung versetzt und der pH-Wert derartig stabilisiert, daß keine Peptisation des Gels stattfindet. Nach dem Dekantieren der organischen Phase wird mit einem geeigneten organischen Lösungsmittel, bevorzugt mit Petrolether, gewaschen. Zum Entfernen des Emulgators und organischer Verunreinigungen wird die Lösung anschließend mit Detergenzien, vorzugsweise mit Triton, versetzt. Die Lösung wird abgesaugt und das Gel mit Wasser und Aceton gewaschen.

Das Gel wird getrocknet und gegebenenfalls getempert. Wird ein SnO-System gewünscht reicht eine Trocknung bis maximal 230°C, bevorzugt bei 75°C bis 110°C. Wird ein $SnO_2$-System gewünscht erfolgt nach der Trocknung eine Temperung. Die Temperung wird bei Temperaturen zwischen 230°C und 500°C, bevorzugt zwischen 255°C und 350°C, ganz besonders bevorzugt bei 350°C, durchgeführt. Getempert wird zwischen 10 min und 5 Stunden, bevorzugt zwischen 90 min und 3 Stunden, ganz besonders bevorzugt 2 Stunden.

Die nachfolgenden Beispiele sollen die Erfindung näher erläutern, ohne sie jedoch zu beschränken.

## Beispiele

Beispiel 1

**Sol-Gel Synthese**

**Lösung 1:**

In einem Vierhalskolben mit Rührer werden 250 ml Wasser vorgelegt. Unter intensivem Rühren (350 U/min) und Eiskühlung werden innerhalb von 90 min 235 ml $SnCl_4$ zugetropft. Es bildete sich ein weißer Niederschlag, der durch Erwärmen der Lösung sich zu lösen beginnt. Die Erwärmung erfolgt über 60 min und wird nach vollständiger Auflösung des Niederschlages und Erreichen der Siedetemperatur (122°C) beendet. Nach dem Abkühlen auf Raumtemperatur werden 600 g Harnstoff eingetragen und vollständig aufgelöst. Der endotherme Lösevorgang führt zu einer klaren hochviskosen Lösung, die mit Wasser zu einem Liter Lösung aufgefüllt wird.

Beispiel 2

**Lösung 2:**

Zum Herstellen der Lösung 2 werden 490 g Urotropin (Hexamethylentetramin=HMT) mit 600 ml Wasser im Becherglas auf dem Magnetrührmotor gelöst und nach erfolgtem leicht exothermen Auflösen zu einem Liter leicht grünlich-trüber Lösung aufgefüllt.
Es werden 38,5 ml Lösung 1 (0,077 mol = 11,6 g $SnO_2$) und 2 g Ammoniumflurid für 4 min in einem 250 ml Becherglas im Eisbad vorgekühlt. Nach Zusatz von 22 ml Lösung 2 (0,077 mol) wird 3 min lang bei 50°C und 350 U/min (Rührer zweiblättrig, 4 cm) gerührt bis das Sol klar ist.

Beispiel 3

**Emulsionsbildung:**

Im 1 Liter Becherglas werden 2,0 g Span80 (= 0,74%) mit 400 ml Benzin versetzt und bei 350 U/min vermischt. Die Temperatur wird mittels eines Wasserbades auf 50°C eingestellt.
Das in Beispiel 2 beschriebene, frisch angesetzte Gemisch wird bei 400 U/min zugegeben und emulgiert. Nach ca. 4 min entsteht das Gel.
Nach 10 min werden 10 ml 1%-iger Ammoniak zugegeben und noch weitere 6 min bei 400 U/min emulgiert

Beispiel 4

**Phasentrennung und Extraktion:**

Die organische Benzin-Phase wird dekantiert und mit 2 x 35 ml Petrolether nachgewaschen und getrennt. Zum Entfernen des Emulgators wird das Gel mit 30 ml Triton-Lösung (Konzentration der Triotonlösugn kann dem System angepasst werden) versetzt und 6 min im Becherglas aufgeschlämmt. Das Gemisch wird über eine Nutsche abgesaugt und mit 200 ml Wasser nachgewaschen. Danach wird mit Aceton überschichtet und exakt 15 min abgesaugt.

Beispiel 5

**Trocknung und Temperung:**

Es wird einen Tag an der Luft und einen Tag im Trockenschrank bei 60°C getrocknet.
Aussehen vor dem Tempern:

weißlich transparente gleichmäßige Kugeln

Temperung: Programm: 20°C→180 min→350°C/120 min→20°C Aussehen: fast unverändert

REM Untersuchungen zeigen sphärische Partikel.

Die gemessene Kapazität der Anode bestehend aus einem $SnO_{2-x}Y_x$-System dotiert mit Fluorid liegt nach dem 3. Zyklus noch bei bemerkenswerten 500 mAh/g.

**Patentansprüche**

1. Anodenmaterial, enthaltend dotiertes Zinnoxid.

2. Anodenmaterial gemäß Anspruch 1, **dadurch gekennzeichnet, daß** die Dotierung mit Anionen ausgewählt aus der Gruppe F, Cl, Br, I, S, Se, Te, B, N und P erfolgt.

3. Anodenmaterial gemäß der Ansprüche 1 oder 2, **dadurch gekennzeichnet, daß** die Dotierung im Bereich zwischen 1 und 20 Gew% erfolgt.

4. Anodenmaterial gemäß der Ansprüche 1 bis 3, **dadurch gekennzeichnet, daß** die Dotierung im Bereich zwischen 5 und 15 Gew% erfolgt.

5. Verfahren zur Herstellung des Anodenmaterials gemäß der Ansprüche 1 bis 4, **dadurch gekennzeichnet, daß**

   a) eine Zinnchlorid-Lösung mit Harnstoff versetzt wird,

   b) die Lösung mit Urotropin und einer geeigneten Dotierverbindung versetzt wird,

   c) das so erhaltene Sol in Petrolether emulgiert wird,

   d) das erhaltene Gel gewaschen und das Lösungsmittel abgesaugt sowie

e) das Gel getrocknet und getempert wird.

6. Elektrochemische Zelle bestehend aus Kathode, Anode, Separator und Elektrolyt, **dadurch gekennzeichnet, daß** sie Anodenmaterial gemäß der Ansprüche 1 bis 4 enthält.

7. Verwendung von dotiertem Zinnoxid als Anodenmaterial.

8. Verwendung von Anodenmaterial gemäß der Ansprüche 1-4 in elektrochemischen Zellen zur Verbesserung der Zyklenstabilität und Erhöhung der Kapazität.

9. Verwendung von Anodenmaterial gemäß der Ansprüche 1 bis 4 in elektrochemischen Zellen, Batterien und sekundären Lithiumbatterien.